# EUROPEAN PATENT APPLICATION

(11) **EP 2 045 490 A1**
(43) Date of publication of application: **08.04.2009**
(21) Application number: 07791192.3
(22) Date of filing: 23.07.2007
(51) Int. Cl.: F16J 15/34

(54) **MECHANICAL SEAL DEVICE**

(30) Priority: 25.07.2006 JP 2006202495
(71) Applicant: Eagle Industry Co., Ltd., Minato-ku Tokyo 105-8587 (JP)
(72) Inventor: TESHIMA, Yoshihiro, Tokyo 105-8587 (JP); OSHII, Yoji, Tokyo 105-8587 (JP); WATANABE, Koji, Tokyo 105-8587 (JP)
(74) Representative: Feakins, Graham Allan
(86) International application number: PCT/JP2007/064460
(87) International publication number: WO 2008/013147

(57) **Abstract**

A mechanical seal device having a stationary sealing ring attached in close contact to a seal cover, a rotating sealing ring having a counter seal face in close contact with the seal face, and a fixing part having a first fixed ring holding the rotating sealing ring and a second fixed ring fitting in close contact with the rotary shaft and having a bellows surrounding the rotary shaft, having one end connected with the first fixed ring, and having another end connected with the second fixed ring, one seal face of the seal face and the counter seal face having fluid introduction ports for introducing the sealed fluid to the seal face at the circumferential surface at the sealed fluid side and the other seal face having dimples, or one seal face having the fluid introduction ports and the dimples, the dimples being arranged in lines radiating from a center of the seal face.

## Description

### TECHNICAL FIELD

The present invention relates to the technical field of contact type mechanical seal devices in particular for sealing fluids of liquids used in compressors, pumps, and etc. in which gases are mixed.

### BACKGROUND ART

Conventional mechanical seal devices suffer from various problems due to the sealed fluid when sealing rotating parts of a system using a chemical fluid, in particular, a freezer oil, a refrigerant, and etc. For example, when sealing a sealed fluid (working fluid) present around a rotary shaft of a feed device (pump), chemical system, and etc., feeding a freezer oil or ammonia refrigerant to a car air-conditioner, freezer compressor, and etc., various problems were discovered such as the insufficient lubrication action by the sealed fluid at the seal faces of the mechanical seal device. In particular, when a mechanical seal device seals a sealed fluid such as a chemical liquid, sometimes reaction products or evaporated gas of the chemical liquid becomes interposed between the sliding seal faces of the pair of sealing rings moving relative with each other and heat is generated due to the sliding. Further, the squealing of the seal faces of the mechanical seal device is unpleasant noise to the surroundings. Furthermore, there is also the problem that the heat generated at the sliding seal faces causes the sealing ability of the seal faces to drop and the sealed fluid may leak, the sealed fluid wears down, or damages the sliding parts of the mechanical seal device. It is becoming urgent to improve these problems. Further, mechanical seal devices are becoming more complicated in structure such as with the double type mechanical seal device so as to seal sealed fluids containing evaporated gases. For this reason, there is also the problem that the cost for manufacturing raises.

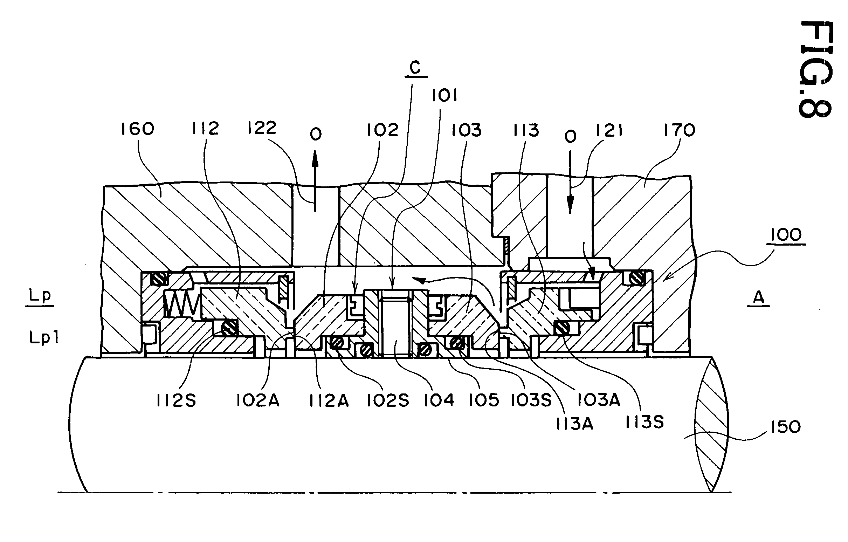

As a similar technology to the present invention, there is the mechanical seal device shown in FIG. 8. The mechanical seal device 100 shown in FIG. 8 is a so-called "double type seal device". This double type seal system includes various structures, but basically two stationary sealing rings 112, 113 are arranged facing each other across a rotary seal device 101 comprised of first and second rotating sealing rings 102 and 103 (see Patent Document 1, Patent Document 2, or Patent Document 3 described in paragraph 0008) . The mechanical seal device of this FIG. 8 will be explained. The seal housing 170 is divided into one seal housing 160 and another seal housing 170 for assembling of the mechanical seal device 100 inside it.

Further, the rotating sealing device 101 has the first rotating sealing ring 102 and the second rotating sealing ring 103 arranged at the two sides of a fixed ring 105 fixed by a setscrew 104 to a rotary shaft 150 with facing back surfaces. Note that the relative moving surfaces in the axial direction of the first rotating sealing ring 102 are sealed by a first O-ring 102S. Further, the relative moving surfaces in the axial direction of the second rotating sealing ring 103 are sealed by a second O-ring 103S. Furthermore, the first stationary sealing ring 112 is held at one seal housing 160, while the second stationary sealing ring 113 is held at the other seal housing 170. Note that the relative moving surfaces in the axial direction of the first stationary sealing ring 112 are sealed by a third O-ring 112S. Then, the relative moving surfaces in the axial direction of the second stationary sealing ring 113 are sealed by a fourth O-ring 113S. Further, the first seal face 102A of the first rotating sealing ring 102 and the second seal face 112A of the first stationary sealing ring 112 closely contact each other. Also, the third seal face 103A of the second rotating sealing ring 103 and the fourth seal face 113A of the second stationary sealing ring 113 closely contact each other.

Such configured mechanical seal device 100 is formed with a sealing fluid chamber C arranged in the space provided inside the seal housings 160, 170 and at the outer circumferential side of the rotary seal device 101. Lubrication fluid O is fed to this sealing fluid chamber C by a pump, which is not shown, from a first passage 121 and flows out from a second passage 122. This lubrication fluid O is circulated by the pump. This sealing fluid chamber C is filled with the lubrication fluid O being fed, for example, a liquid lubricant. Further, the first seal face 102A and the second seal face 112A come into close contact and separate the sealing fluid chamber C from the process fluid chamber Lp. Further, the third seal face 103A and the fourth seal face 113A come into close contact and separate the sealing fluid chamber C from the atmosphere side A.

In such a mechanical seal device 100, when the sealed fluid (process fluid Lp1) is a chemical liquid, in particular, the O-rings sealing sliding locations such as the first O-ring 102S, second O-ring 103S, third O-ring 112S, and fourth O-ring 113S are often damaged by the chemical liquid at the early satge. For this reason, the durability of the mechanical seal device 100 falls. Furthermore, since the sealing ability of the mechanical seal device 100 falls, the frequency to replacement by new mechanical seal devices 100 increases and the cost rises for maintaining the mechanical seal device.

Further, it became known that even if the pressure inside the sealing fluid chamber C is higher than the pressure in the process fluid chamber Lp, the lubrication fluid O is not fed between the sliding faces of the first seal face 102A and the second seal face 112A. This is thought to be caused by the fluid present between the sliding faces of the first seal face 102A and the second seal face 112A which are pushed out by centrifugal force toward the sealing fluid chamber C. Furthermore, when a liquid process fluid Lp1 of the chemical liquid is fed into the sealing fluid chamber C, the sliding faces of the first seal face 102A and the second seal face 112A may lose their lubrication action, therefore the heat may be generated by sliding against each other. In particular, even when the freezer oil or other lubrication oil are present between the sliding faces of the first seal face 102A and the second seal face 112A, if the process fluid Lp1 is a refrigerant or volatile fluid, the refrigerant or evaporated gas will be mixed with the lubrication oil, hense the sliding faces of the first seal face 102A and the second seal face 112A will slide and generate the heat. Furthermore, the noise caused by this sliding, that is, the squealing, will be produced. It became known that this squealing occurs when one seal face of the two seal faces 102A, 112A sliding relative to each other finely vibrates due to a back surface of the sealing ring which is supported by a spring (when the natural frequency is small), or when the sliding faces are insufficiently lubricated, and etc.

Furthermore, it was also learned that when the pair of seal faces slide with respect to each other and generate the heat, the sliding faces of the two seal faces 102A and 112A deform due to the heat and therefore the sealing ability is reduced. At the same time, a simultaneous problem is caused at the sliding faces of the third seal face 103A and the fourth seal face 113A. Further, the durability of the mechanical seal device 100 falls. Note that even if the independent pores were provided at the sliding faces of the first seal face 102A and the second seal face 112A, it was impossible to solve this problem (for example, for sealing rings provided with such independent pores, see Patent Document 4). Further, as shown in Patent Document 1 and Patent Document 2, if the pressure grooves are provided at the sliding seal faces, the seal faces will be in a non-contact state, so the heat generated due to the sliding can be reduced, but the problem arises of the process fluid Lp1 or lubrication fluid O leaking from the sliding seal faces to the opposite side. Furthermore, to seal a chemical liquid, the seal structure becomes complicated, so the manufacturing costs rises.

Patent Document 1: Japanese Patent No. 2954125
Patent Document 2: Japanese Patent No. 3066367
Patent Document 3: U.S. Patent No. 5213340
Patent Document 4: Japanese Patent Publication (B2) No. 5-69066

### DISCLOSURE OF THE INVENTION

### PROBLEM TO BE SOLVED BY THE INVENTION

The present invention was made in consideration of the above problem. The technical objective which the invention tries to solve is to prevent a sliding noise of the seal faces produced when sealing a sealed fluid such as a chemical fluid. Furthermore, the objective is to prevent the seal faces from being worn and breaking due to the heat generated by the sliding. Also, the objective is to make the pair of seal faces in close contact to each other to improve the sealing ability. Furthermore, the objective is to simplify the structure of the mechanical seal device to reduce the manufacturing costs.

### MEANS FOR SOLVING THE PROBLEM

The present invention was made for solving the above technical problem. The means for technical solution are as follows.

The mechanical seal device according to the present invention provides a mechanical seal device for sealing a process fluid between a seal housing and a rotary shaft, having a stationary sealing ring attached in close contact to an inner circumferential surface of a seal cover connected to the seal housing and having a seal face at one end face surrounding the rotary shaft, a rotating sealing ring having a ring-shaped counter seal face able to slide in close contact with the stationary seal face, a fixing part having a first fixed ring attached in close contact with the rotating sealing ring and surrounding the rotary shaft and a second fixed ring able to be arranged in close contact with the rotary shaft and having a metal or plastic elastic bellows surrounding the rotary shaft, having one end connected with the first fixed ring in a sealed manner, while another end connected with the second fixed ring in a sealed manner, one seal face from the seal face and the counter seal face having fluid introduction ports for introducing the sealed fluid to the seal face at the circumferential surface at the sealed fluid side and the other seal face having long dimples or one seal face having the fluid introduction ports and the dimples, a plurality of the dimples being arranged in lines radiating from a center of the ring shape of the seal face.

### EFFECTS OF THE INVENTION

The mechanical seal device according to the present invention is not configured like in the past such that rotating sealing rings able to move along the rotary shaft in which such movement is difficult due to O-rings press-fit between the moving surfaces, but the present invention uses a stretchable elastic metal or plastic bellows to seal the rotating sealing rings and a rotary shaft, so even if the sealed fluid is a chemical liquid, it can prevent the deterioration of the material of the bellows; and the ability of a counter seal face of the rotating sealing ring to move with a seal face is improved. Therefore, the counter seal face pushed by the bellows can be in close contact constantly to the seal face to exhibit a sealing ability. Simultaneously, a durability is also exhibited due to the non-degrading bellows. Also, the rotating sealing ring which is movable due to the bellows causes the squealing when the stationary sealing ring and the seal face slide, but due to the cooperative action between the fluid introduction ports and dimples provided at the seal faces, the sealed fluid is introduced to the sliding seal faces, and a lubrication action of the seal faces is exhibited over a long time which prevents the unpleasant squealing. Further, due to the lubrication action when the seal faces slides, it can improve the sealing ability of the seal faces and prevent the generation of heat and wear when the seal faces slides.

### BRIEF DESCRIPTION OF THE DRAWINGS

FIG. 1 is a cross-sectional view of one side of a mechanical seal device according to a first embodiment of the present invention.

FIG. 2 is a front view of a stationary sealing ring shown in FIG. 1.

FIG. 3 is a front view showing part of a dimpled seal face arranged on a radial line of the seal face from a center of the stationary sealing ring according to another embodiment.

FIG. 4 is a front view showing a counter seal face provided with fluid introduction ports of the rotating sealing ring of FIG. 1.

FIG. 5 is a cross-sectional view of one side in which a rotating sealing ring fixing part of FIG. 1 is enlarged.

FIG. 6 is a front view showing the counter seal face of the rotating sealing ring according to another embodiment.

FIG. 7 is a cross-section of an entire mechanical seal device according to a second embodiment of the present invention.

FIG. 8 is a cross-section of one side of a mechanical seal device of a prior art relating to the present invention.

### EXPLANATION OF REFERENCES

- 1: mechanical seal device
- 3: rotating sealing ring
- 3A: counter seal face
- 3B: outer circumferential surface
- 3C: inner circumferential surface
- 4: fluid introduction ports
- 4A: second fluid introduction ports
- 10: fixing part for rotating sealing ring (fixing part)
- 10A: first fixed ring
- 10A1: engaging surface
- 10B: bellows
- 10C: connecting surface
- 10D: second fixed ring
- 10N: female thread
- 11: set screw
- 20: stationary sealing ring
- 20A: seal face
- 20B: dimpled seal face (dimpled surface)
- 20C: passage surface
- 20D: pin groove
- 21: dimple
- 22: engaging circumferential surface
- 30: sleeve
- 30A: outer circumferential surface
- 31: nuts
- 45: seal part (oil seal)
- 60: seal housing
- 60C: inner surface
- 70: seal cover
- 70C: inner circumferential surface
- 75: feed holes
- 76: introduction hole
- A: outside part
- C: passage
- D: fluid chamber
- Lp: inside part

### BEST MODE FOR CARRYING OUT THE INVENTION

Below, a mechanical seal device of embodiments according to the present invention will be explained based on the drawings. Note that, the figures explained below are views based on the design drawings.

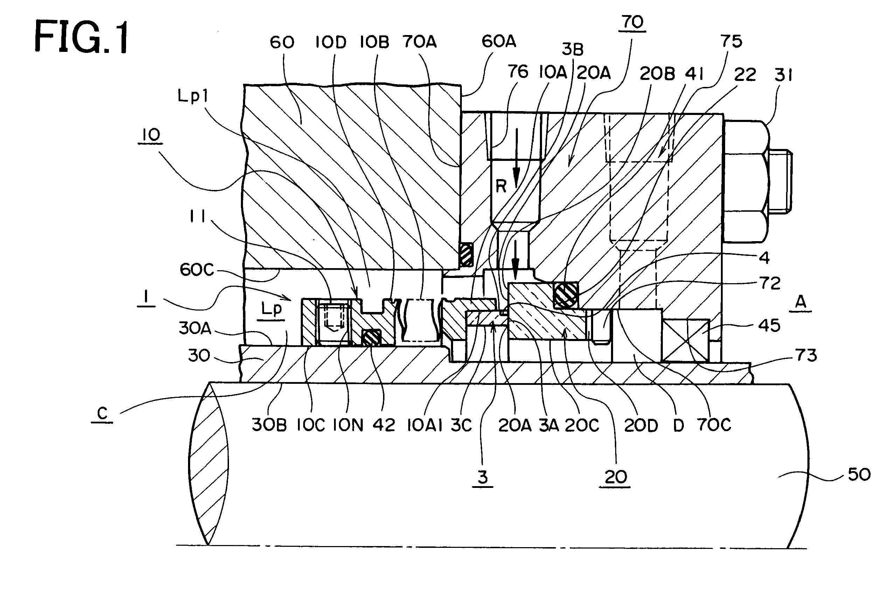

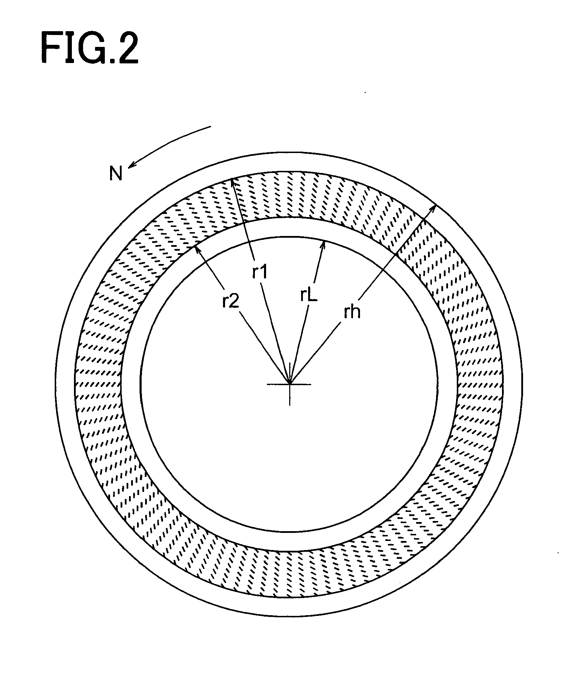

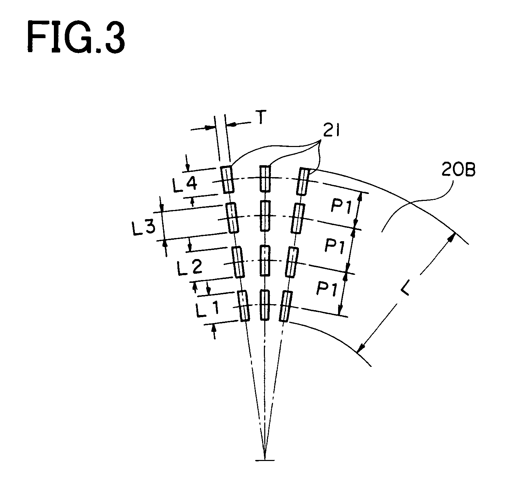

FIG. 1 is a cross-sectional view of one side attaching a mechanical seal device 1 according to the present invention between a seal housing 60 and a rotary shaft 50 to seal therebetween. Also, FIG. 2 is a front view of a seal face 20A of a stationary sealing ring 20 provided at the mechanical seal device 1 of FIG. 1. Furthermore, FIG. 3 is a front view showing part of the dimpled seal face 20B of another embodiment.

### Embodiment 1

FIG. 1 is a mechanical seal device 1 showing a first embodiment according to the present invention. A rotary shaft 50 penetrates through the inside of the inner surface 60C of the seal housing 60 forming a shaft bore. This mechanical seal device 1 is attached between an inner circumferential surface 70C of a seal cover 70 and an outer circumferential surface 30A of a sleeve 30 engaged on the rotary shaft 50. This seal cover 70 is joined with an outer end face 60A of the seal housing 60. Also, the rotary shaft 50 is fit inside the inner surface 60C of the seal housing 60 and supported rotatably by a bearing which is not shown. Note that the inside of the inner surface 60C of the seal housing 60 is the inside part Lp, while the outside of the seal cover 70 side of the mechanical seal device 1 is defined as the outside part A. Further, the seal cover 70 is devided for attachment of the mechanical seal device 1, however it may also be formed as a single piece. Further, it is also possible to attach the fixing part 10 directly to the rotary shaft 50 without providing the sleeve 30 at the rotary shaft 50.

Furthermore, based on FIG. 1, FIG. 2 and FIG. 3, the detailed configuration of the mechanical seal device 1 will be explained. The seal cover 70 attached to the seal housing 60 is formed in a rectangular shape or circular shape. This seal cover 70 is provided with U-shaped fixing grooves, which are not shown in the figure, running through it at four equidistant positions along the circumferential surface. Stud bolts provided at the outer end surface 60A passes through the fixing grooves of this seal cover 70, then nuts 31 are fastened to the stud bolts. Then, at the outer end face 60A of the seal housing 60, a mounting surface 70A of the seal cover 70 is fixed by connecting. At the inside of this seal cover 70, an inner circumferential surface 70C which is concentric with the inner surface 60C of the seal housing 60 is provided.

At the inner circumferential surface 70C of this seal cover 70, an engaging surface 73 in which a seal part 45 is attached is formed at the outside part A side. This engaging surface 73 mounts the seal part 45 for sealing a liquid lubricant or sealing liquid. For this seal part 45, for example, a seal ring, O-ring, and etc. may be used. Also, at the inside part Lp side from the seal part 45 of the inner circumferential surface 70C of the seal cover 70, a stepped circumferential surface engaging with a engaging face 20B of the stationary sealing ring 20 is provided. Also, at the inside part Lp side of the stepped circumferential surface, an introduction hole 76 penetrating from the outside is provided. From this introduction hole 76, a flushing solution R is flushed to a position at the fluid introduction port 4 side at the joint between the seal face 20A and the counter seal face 3A. Next, a plurality of fixing pins 72 are implanted at positions in the radial direction equally arranged along the circumferential surface at the back surface side of the stationary sealing ring 20 at the inner circumferential surface 70C. Note that the fluid chamber D between the stationary sealing ring 20 and the seal part 45 at the seal cover 70 can also be provided with a feed hole 75 penetrating from the outside to the fluid chamber D. When this feed hole 75 is provided, a liquid coolant or liquid lubricant introduced from a tank, which is not shown, can be fed into the fluid chamber D. Further, it is also possible to not provide a tank, but store water or liquid lubricant and etc. in the fluid chamber D.

The engaging face 20B of the stationary sealing ring 20 engaging with the inner circumferential surface 70C of the seal cover 70 is formed with a stepped connecting circumferential surface 22. This connecting circumferential surface 22 can fit with a O-ring 41 for sealing between the stepped circumferential surface of the inner circumferential surface 70C. Also, at the front end of the inside part Lp side of the stationary sealing ring 20, a seal face 20A is provided. Furthermore, at the back surface of the opposite side of the seal face 20A of the stationary sealing ring 20, U-shaped pin grooves 20D engaging with a plurality of fixing pins 72 are provided along the circumferential surface. Further, at the inner circumference of the stationary sealing ring 20, a passage surface 20C is formed. The inner circumferential side of this passage surface 20C forms a part of the fluid chamber D at the inside part Lp side in between the outer circumferential surface 30A of the sleeve 30. This stationary sealing ring 20 is formed from silicon carbide, superhard steel, ceramic, and etc.

FIG. 2 is a front view of a seal face 20A side of the stationary sealing ring 20. The seal face 20A, as illustrated, is provided with a large number of dimples 21 on a large number of radial lines (radial direction lines) passing through the center of the stationary sealing ring 20. The dimples 21 form shapes elongated in inclined directions. As for the shapes of the dimples 21, a recessed shaped inclined longitudinally to the outside of the rotational direction N are employed as an example. Also, ones formed recessed longitudinally along radial lines are also employed as examples. The dimples 21 are formed elongated, but it may also be formed into recessed rectangles, ellipses, Z-shapes in the radial direction, and V-shapes in the radial direction. However, the dimples 21 are preferably shaped with longitudinal directions inclined to the outside with respect to the radial direction or rotational direction. Furthermore, the range of the dimpled seal face 20B in the width (rh-rL) in the radial direction of the seal face 20A, as shown in FIG. 2, is between the inner circumferential line r2 and the outer circumferential line r1. Alternatively, it is also possible to form the dimpled seal face 20B over the entire width of the seal face 20A (rh-rL).

FIG. 3 is a front view showing part of a dimpled seal face 20B of another embodiment. This is an example which recessed rectangular dimples 21 shown in this FIG. 3 are provided on the radial lines on the ring-shaped dimpled seal face 20B of the stationary sealing ring 20 (stationary sealing ring 20 having a similar shape as FIG. 1) . The dimples 21 have vertical lengths of L1, L2, L3, and L4, and a horizontal width of T. The width may be formed into various shapes. Also, the pitch of the dimples 21 in the radial direction is P1. Further, the width of the dimpled seal face 20B in the radial direction is L (same as width of r1-r2 of FIG. 1). The dimensional relationship in the radial direction of the dimples 21 of FIG.3 is formed to satisfy (L1+L2)/2×1.5=about P1. Also, it is formed to satisfy 1/3×L4=about T. the dimensional range of the vertical lengths L1, L2, L3, and L4 of these recessed dimples 21 are formed within 0.1 mm to 0.6mm. More preferably, the dimensional range of L1, L2, L3, and L4 may be within 0.2 mm to 0.4 mm. Further, the horizontal width T of the dimples 21 is formed within the range of 0.02 mm to 0.2 mm. More preferably, the dimensional range of T may be within 0.05 mm to 0.1 mm. Note that the depths of the recessed dimples 21 should be in the range of 0.001 mm to 0.01 mm. These dimensional relationships are examples, and when the stationary sealing ring 20 is enlarged, the shape of the dimples 21 may be enlarged proportional to the size of the stationary sealing ring 20. These dimples 21 can be easily formed by and etching as shown by the dimpled seal face 20B.

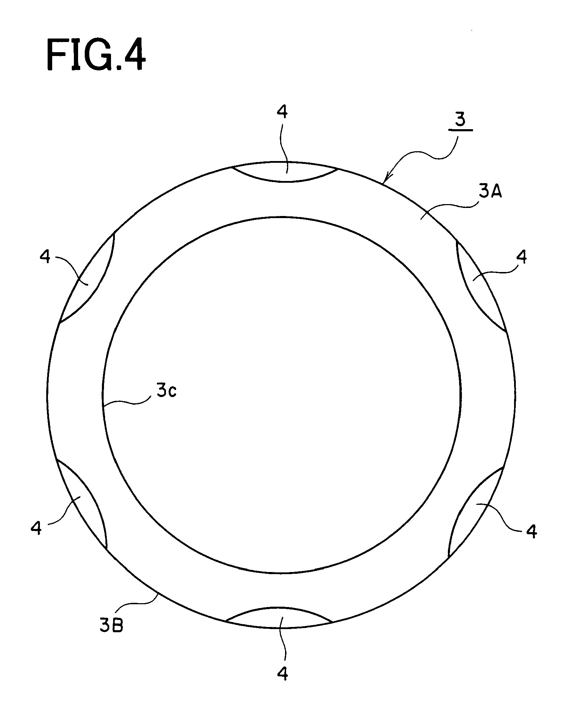

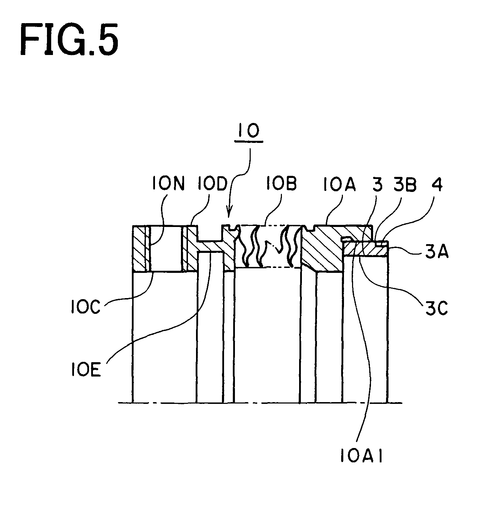

FIG. 4 is a front view of the counter seal face 3A of the rotating sealing ring 3 shown in FIG. 1. Further, FIG. 5 is an enlarged cross-sectional view of one side of a fixing part for rotating sealing ring (hereinafter referred to as a "fixing part") 10 attaching the rotating sealing ring 3. Below, the rotating sealing ring 3 and the fixing part 10 will be explained with reference to FIG. 1, FIG. 4, and FIG. 5. This rotating sealing ring 3 is formed into a cylindrical shape. This rotating sealing ring 3 is made of carbon, for example, a high strength dense carbon, that is, nonimpregnated carbon. This rotating sealing ring 3 is provided with the counter seal face 3A at the front surface of one end. Furthermore, at the outer circumferential side of the counter seal face 3A of the rotating sealing ring 3, the fluid introduction ports 4 which are cut in an arc shape are formed at six equidistant positions along the circumferential surface. These fluid introduction ports 4 are, as an example, formed to have a length dimension in the axial direction in range of 1 mm to 4 mm. Further, they are formed to have a length dimension in the radial direction of 0.3 mm to 2 mm. Note that the fluid introduction ports 4 are not limited to arc shapes. They may also be formed into rectangular grooves, spiral grooves, S-shaped grooves, U-shaped openings, and etc. as long as it enables the fluid (the flushing solution R or process fluid Lp1 from the introduction hole 76) to be introduced between the sliding faces of the seal face 20A and the counter seal face 3A. Furthermore, the gap between the inner circumferential surface 3C of the rotating sealing ring 3 and the outer circumferential surface 30A of the sleeve 30 are separated by the inside part Lp side and the seal faces 3A, 20A and it communicates with the fluid chamber D.

On the outer circumferential surface of the rotary shaft 50, an inner circumferential surface 30B of the sleeve 30 is fit. This sleeve 30 fixes a mounting part at an end side not shown by a setscrew to the rotary shaft 50. Further, the sleeve 30 is provided with a stepped surface at an outer circumferential surface 30A to form a large diameter part and a small diameter part. In between the outer circumferential surface 30A of the sleeve 30 and the inner surface 60C of the seal housing 60, a passage C communicating with the inside part Lp is formed in which the process fluid Lp1 flows. Note that the sleeve 30 is formed from stainless steel, brass, iron, or other materials.

Further, the back surface at the opposite side of the counter seal face 3A of the rotating sealing ring 3 and the outer circumferential surface 3B are joined by fitting at a holed closed bottom tubular shaped engaging surface 10A1 of the first fixed ring 10A. The first fixed ring 10A is provided at the front end at the outside part A side of the fixing part 10 held at the rotary shaft 50 side (sleeve 30). The side of this fixing part 10 at the inside part Lp side from the first fixed ring 10A is formed at the second fixed ring 10D. Further, the first fixed ring 10A and the second fixed ring 10D are tightly connected by a metal elastic bellows 10B. This tubular shaped bellows 10B surrounds the sleeve 30 along with one end being connected to the first fixed ring 10A, and the other end is connected to the second fixed ring 10D. Further, the bellows 10B having this elasticity uses a spring force to elastically press the counter seal face of the rotating sealing ring 3 to the seal face 20A of the stationary sealing ring 20. The process fluid Lp1 is stopped from flowing out to the fluid chamber D side by the closely contacting seal faces 3A, 20A. Also, the second fixed ring 10D fit the connecting surface 10C of the inner circumference to the outer circumferential surface 30A of the sleeve 30. At the engaging part between this connecting surface 10C and sleeve 30, an O-ring 42 is fit into an O-ring attachment groove 10E provided at the connecting surface 10C (see FIG. 5). The O-ring 42 is used to shut the two sides in the axial direction of the engaging faces. Furthermore, the second fixed ring 10D is provided with a female thread 10N penetrating through the radial direction (inner/outer circumferential surfaces) . A setscrew 11 is screwed into this female thread 10N to fix the second fixed ring 10D to the sleeve 30. Note that the fixing part 10 is formed from stainless steel, brass, or another material. Also, the O-ring 42 used for the fixing part 10 and the O-ring 41 used for the stationary sealing ring 20 may be formed by a rubber elastic resin or a rubber material for the chemical liquid resistant rubber material, for example, nitrile rubber (NBR), hydrogenated nitrile rubber (HNBR), polytetrafluoroethylene (PTFE) resin, fluororubber (FKM), and etc.

### Embodiment 2

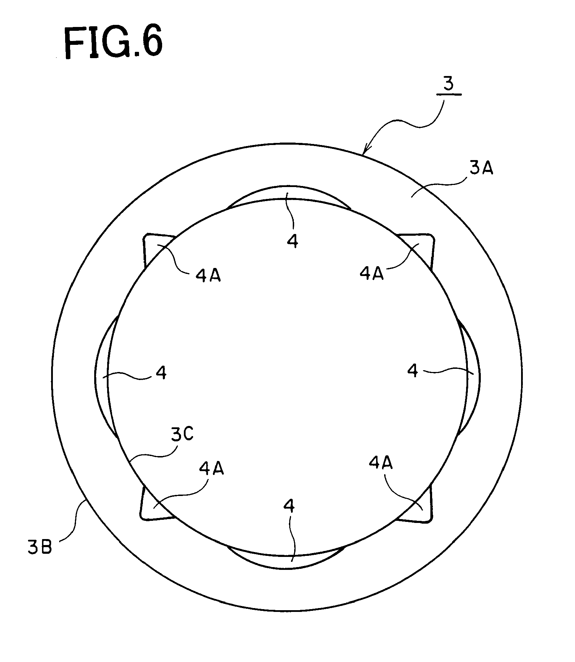

FIG. 6 shows a rotating sealing ring 3 of Embodiment 2. This rotating sealing ring 3 is provided with fluid introduction ports 4 at the inner circumferential side of the seal face 3A. Further, the fluid introduction ports 4 may also be arranged combined with the second fluid introduction ports 4A having a different shapes. Further, in this mechanical seal device 1, unlike the structure of the mechanical seal device 1 of FIG. 1, this rotating sealing ring 3 is used for an outside type mechanical seal device sealing a sealed fluid leaking to the outer circumferential side from the inner circumferential side of the counter seal face 3A (when process fluid or so of the sealed fluid is interposed in inner circumferential surface of rotating sealing ring 3). Further, the inside part Lp and the gap at the inner circumferential side of the rotating sealing ring 3 are communicated. In this mechanical seal device, a flushing solution (or quenching solution) is introduced from the feed hole 75 of FIG. 1 to the inner circumferential side of the rotating sealing ring 3, and the liquid lubricant is introduced from the fluid introduction ports 4, 4A to the sliding faces between the counter seal face 3A with the fluid introduction ports 4 of the rotating sealing ring 3 and the seal face 20A with dimples 21 of the stationary sealing ring 20. In this mechanical seal device 1, as an example, water, lubrication oil, and etc. are introduced from the feed hole 75. Note that the seal face 20A of the stationary sealing ring 20 is formed with dimples 21 similar to FIG. 2 or FIG. 3.

### Embodiment 3

Furthermore, while the overall illustration is omitted, as embodiment 3, in the mechanical seal device 1 of FIG. 1, the rotating sealing ring 3 shown in FIG. 6 is attached. In this case, a flushing solution (for example, a clear water) is fed from the feed hole 75 to interpose the flushing solution (liquid lubricant) from the fluid introduction ports 4 to the sliding faces between the counter seal face 3A with the fluid introduction ports 4 of the rotating sealing ring 3 and the seal face 20A of the stationary sealing ring 20 with the dimples 21. In particular, it can exhibit a superior effect when employed at the time of a special chemical fluid which becomes a problem if the process fluid Lp1 is at the sliding faces between the counter seal face 3A of the rotating sealing ring 3 and the seal face 20A of the stationary sealing ring 20 are directly interposed. Note that the arrangement of the fluid introduction ports 4 and dimples 21 at the seal faces 3A, 20A is similar to FIG. 2, FIG. 3, FIG. 4, and FIG. 6.

### Embodiment 4

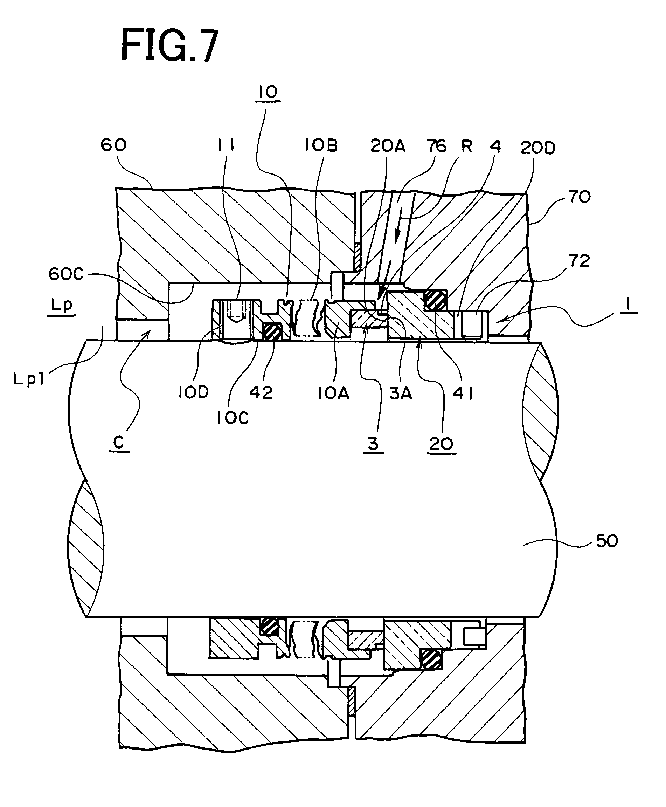

FIG. 7 is an overall cross-sectional view of the mechanical seal device 1 of Embodiment 4. In the mechanical seal device 1 of FIG. 7, what is different from the mechanical seal device 1 of FIG. 1 is that the sleeve 30 is not provided at the outer circumferential surface of the rotary shaft 50. Also, the feed hole 75 is not provided at the seal cover 70. The rest of the configuration is substantially the same as in FIG. 1 as shown by reference numerals same as FIG. 1. In this case as well, the flushing solution R is fed from the introduction hole 76 to the fluid introduction ports 4 provided at one of the counter seal face 3A of the rotating sealing ring 3 and the seal face 20A of the stationary sealing ring 20. Then, flushing solution R is introduced from the fluid introduction ports 4 provided at this counter seal face 3A to the sliding faces between the counter seal face 3A and the seal face 20A to lubricate the sliding seal faces 3A, 20A and prevent wear of the seal faces 3A, 20A. Simultaneously, it prevents heat generated at the sliding faces between the counter seal face 3A and the seal face 20A, and prevents the noise at the time of sliding, that is, the squealing of the mechanical seal.

This mechanical seal device 1 fits the second fixed ring 10D on the rotary shaft 50 to fix the two parts. Further, the O-ring 42 is fit in the O-ring attachment groove 10E of the second fixed ring 10D (see FIG. 5), and the second fixed ring 10D is fit on the outer circumferential surface of the rotary shaft 50. Further, a setscrew 11 is used to fix the second fixed ring 10D to the rotary shaft 50. By assembling the parts in this way, the fixing part 10 provided with the rotating sealing ring 3 is attached to the rotary shaft 50. On the other hand, the stationary sealing ring 20 is fit at the inner circumferential surface 70C of the seal cover 70 (see FIG. 1) by fitting the O-ring 41 at the connecting surfaces 22 (see FIG. 1) . At this time, a fixing pin 72 is inserted into a pin groove 20D to stop the stationary sealing ring 20 from rotating during the relative rotation with the rotating sealing ring 3. Then, the seal cover 70 is attached to the outer end face 60A of the seal housing 60 through a nut 31 (see FIG. 1). In this way, the seal face 20a provided with the dimples 21 of the stationary sealing ring 20 and the counter seal face 3A provided with the fluid introduction ports 4 of the rotating sealing ring 3 comes into a close contact and slide. As a result, the structure of the mechanical seal device 1 is simplified and assembly of the parts becomes easy.

Further, the process fluid Lp1 (sealed fluid) flows into the passage C. However, the process fluid Lp1 is sealed from flowing out to the outside part A by a metal or plastic material bellows 10B of the fixing part 10 (for reference numerals, see FIG. 1 as well). For this reason, the moving parts in the fixing part 10 holding the rotating sealing ring 3 (the first fixing part 10A and rotating sealing ring 3) are prevented from malfunctioning due to the process fluid Lp1 (chemical fluid) . Also, the bellows 10B elastically presses the rotating sealing ring 3 to tightly contact optimally to the seal face 3A of the stationary sealing ring 20 and exhibits a seal effect. Also, the flushing solution R is flushed from the introduction hole 76 to the sliding faces between the counter seal face 3A of the rotating sealing ring 3 and the seal face 20A of the stationary sealing ring 20. This flushing solution R is fed from the fluid introduction ports 4 to the sliding faces and, due to the function of the dimples 21, it promotes the lubrication action of the sliding faces between the counter seal face 3A of the rotating sealing ring 3 and the seal face 20A of the stationary sealing ring 20. Furthermore, the rotating sealing ring 3 can prevent the heat generation and wear at the time of sliding against the counter seal face 3A even if it is held elastically by the elastic bellows 10B. Simultaneously, it can effectively prevent the squealing occurring at the sliding face of the rotating sealing ring 3 elastically held by the bellows 10B. Note that the bellows 10B is superior in sealing the sealed fluid and chemical liquid resistance, but the rotating sealing ring 3 elastically held by the bellows 10B is accompanied with vibration of a small natural frequency when sliding, thus it causes the squealing, the generation of heat due to the sliding, and a drop in the sealing ability, however the present invention has an effect to prevent these problems by constituting as the present invention.

In a conventional non-contact type mechanical seal device providing a pressure groove at a seal face which allows the leakage of sealed fluid to a certain extent, this process fluid Lp1 could not be reliably sealed. However, in the contact type mechanical seal device 1 of the present invention, the counter seal face 3A and the seal face 20A are constantly in a contact state, thus the sealed fluid (process fluid Lp1) can be reliably sealed. Further, the various problems arising at the sliding faces due to the sealed fluid such as a chemical liquid (process fluid Lp1) in which gas is mixed in a contact type mechanical seal device 1 are effectively solved by the combination of the dimples 21 provided at the seal face 20A and the fluid introduction ports 4 provided at the counter seal face 3A facing them.

The mechanical seal device 1 configured in this way acts as follows. The flushing solution R fed from the introduction hole 76 is flushed to the outer circumference between the counter seal face 3A of the rotating sealing ring 3 and the seal face 20A of the stationary sealing ring 20. Further, the interposed process fluid Lp1 or the flushed flushing solution R is fed from the fluid introduction ports 4 to the sliding faces between the counter seal face 3A of the rotating sealing ring 3 and the seal face 20A of the stationary sealing ring 20. Further, due to the function of the dimples 21 arranged at one seal face 20A, the flushing solution R is interposed between the sliding seal faces 3A, 20A to cool the sliding faces of the counter seal face 3A and seal face 20A so that these are not heated and lubricates to prevent them from wearing. Simultaneously, the flushing solution R interposed between this counter seal face 3A and seal face 20A is stored in the dimples 21, and prevents them from heating when sliding the counter seal face 3A and seal face 20A, along with that, it has an effect to prevent the squealing which is accompanied with the heating. Furthermore, the high strength dense carbon forming the rotating sealing ring 3 exhibits a self-lubricating action, thus the generation of heat when sliding the counter seal faces 3A, 20A can also be prevented. For this reason, it can prevent a blistering phenomenon, in which respective seal faces 3A and 20A are stripped by the carbides due to the sealed fluid carbonized and solidified by the heat at the sliding.

Below, the constitution and effects of other embodiments relating to the mechanical seal device of the present invention will be explained.

In the mechanical seal device of the first aspect of the invention according to the present invention, the stationary sealing ring is formed by a silicon carbide material, the rotating sealing ring is formed from a carbon material, the stationary sealing ring has dimples at its seal face, and the rotating sealing ring has fluid introduction ports at its counter seal face.

In the mechanical seal device according to the first aspect of the invention, the stationary sealing ring made of silicon carbide has a wear resistant ability as a sliding member, and exhibits durability. For this reason, it can prevent the damage to the dimples of the seal face, and can store lubrication fluid in the dimples over a long period. Further, the carbon rotating sealing ring exhibits a lubrication effect as carbon with respect to the silicon carbide stationary sealing ring. Simultaneously, this lubrication effect has an effect to prevent wear of the seal faces by introducing the fluid of which introduced from the fluid introduction ports to the sliding seal faces.

The mechanical seal device of the second aspect of the invention according to the present invention is constituted so that the seal cover has a flushing fluid passage, and the flushing fluid injected from the flushing fluid passage flows to the fluid introduction port side between the seal face of the stationary sealing ring and the counter seal face of the rotating sealing ring.

In the mechanical seal device according to this second aspect of the invention, even when the process fluid has no lubrication effect, it flows from the flushing fluid passage to the fluid introduction ports and this flushing fluid is introduced from the fluid introduction ports to the seal face to effectively exhibit a lubrication effect. Simultaneously, it prevents the generation of the heat at the time of sliding and effectively prevents the squealing of the sliding seal faces. Further, the seal face is washed by the flushing fluid therefore the seal face is prevented from being worn by the chemical liquid.

In the mechanical seal device of the third aspect of the invention according to the present invention, the bellows is configured as a spring means which is made of a metal material or plastic material, and contact the counter seal face of the rotating sealing ring elastically to the seal face of the stationary sealing ring.

In the mechanical seal device according to this third aspect of the invention, a fixing part provided at one end of the bellows can be fixed to fix the rotary shaft and the rotating sealing ring provided at the free end can be in close contact with the stationary sealing ring while moving in the axial direction. For this reason, a spring for pushing the rotating sealing ring is not necessary. It has an effect that the bellows can be a metal material or a plastic material so that the bellows is not deteriorated due to a sealed fluid such as a chemical liquid; and the counter seal face of the rotating sealing ring can move with and with closely contact to the seal face of the stationary sealing ring over a long period.

### INDUSTRIAL APPLICABILITY

As explained above, the present invention is a useful mechanical seal device able to prevent wear of the seal faces by a process fluid or other sealed fluid. Furthermore, it is a useful mechanical seal device able to prevent the heat generated by the sliding of the seal faces and effectively prevents the squealing.

## Claims

1. A mechanical seal device for sealing a process fluid between a seal housing and a rotary shaft, comprising;
said mechanical seal device **characterized by** having
a stationary sealing ring attached in close contact to an inner circumferential surface of a seal cover connected with said seal housing and having a seal face at one end face surrounding said rotary shaft,
a rotating sealing ring having a ring-shaped counter seal face able to slide against said seal face in close contact, and
a fixing part comprising a first fixed ring fit in close contact with said rotating sealing ring to surround said rotary shaft, a second fixed ring able to fit in close contact with said rotary shaft, and a metal or plastic elastic bellows of which an one end connects with the first fixed ring in sealed manner while another end connects with said second fixed ring in sealed manner to surround said rotary shaft, wherein
fluid introduction ports for introducing said sealed fluid to said seal face are provided at a circumferential surface of a sealed fluid side of one seal face of said seal face and said counter seal face while the other seal face having long dimples, or
said fluid introduction ports and said dimples are provided at one seal face, and plurality of said dimples are arranged in lines radiating from a center of a ring shape of said seal face.

2. The mechanical seal device as set forth in claim 1, wherein said stationary sealing ring is made of a silicon carbide material, said rotating sealing ring is formed by a carbon material, said stationary sealing ring has dimples on said seal face, and said rotating sealing ring comprises the fluid introduction ports at said counter seal face.

3. The mechanical seal device as set forth in claim 1, wherein said seal cover comprises a flushing fluid passage and a flushing fluid injected from said flushing fluid passage flows to a fluid introduction port side between said seal face of said stationary sealing ring and said counter seal face of said rotating sealing ring.

4. The mechanical seal device as set forth in claim 1, wherein said bellows is comprised as a spring means made of a metal material or a plastic material for making the counter seal face of said rotating sealing ring elastically in close contact with the seal face of said stationary sealing ring.
